# EUROPÄISCHE PATENTSCHRIFT

(11) **EP 2 391 434 B1**
(45) Veröffentlichungstag und Bekanntmachung des Hinweises auf die Patenterteilung: **09.04.2014**
(21) Anmeldenummer: 10701545.5
(22) Anmeldetag: 29.01.2010
(51) Int. Cl.: B01D 53/14, B01D 53/62

(54) **CO2-ABSORPTION AUS GASMISCHUNGEN MIT WÄSSERIGER LÖSUNG AUS 4-AMINO-2,2,6,6-TETRAMETHYLPIPERIDIN**
CO2 ABSORPTION FROM GAS MIXTURES USING AQUEOUS SOLUTIONS OF 4-AMINO-2,2,6,6-TETRAMETHYLPIPERIDINE
ABSORPTION DE CO2 DES MÉLANGES DE GAZ UTILISANT DES SOLUTIONS AQUEUSES DE 4-AMINO-2,2,6,6-TETRAMÉTHYLPIPÉRIDINE

(30) Priorität: 02.02.2009 DE 102009000543
(43) Veröffentlichungstag der Anmeldung: 07.12.2011
(60) Teilanmeldung: 12160549.7
(73) Patentinhaber: Evonik Degussa GmbH, 45128 Essen (DE)
(72) Erfinder: SEILER, Matthias, 64347 Griesheim (DE); ROLKER, Jörn, 63755 Alzenau (DE); SCHNEIDER, Rolf, 63584 Gründau-Rothenbergen (DE); GLÖCKLER, Bernd, 63517 Rodenbach (DE); KOBUS, Axel, 63225 Langen (DE); BENESCH, Wolfgang, 44869 Bochum (DE); RIETHMANN, Thomas, 45128 Essen (DE); WINKLER, Hermann, 43665 Recklinghausen (DE); REICH, Jens, 45472 Mühlheim an der Ruhr (DE); BRÜGGEMANN, Helmut, 47447 Moers (DE)
(86) Internationale Anmeldenummer: PCT/EP2010/051083
(87) Internationale Veröffentlichungsnummer: WO 2010/089257

(56) Entgegenhaltungen:
- DE-A1-102006 036 228
- FR-A1- 2 898 284
- FR-A1- 2 900 841
- FR-A1- 2 900 842

## Beschreibung

### Technisches Gebiet

Die Erfindung betrifft ein Verfahren zur Absorption von CO₂ aus einer Gasmischung, sowie Absorptionsmedien und eine Vorrichtung zur Durchführung des Verfahrens.

Die Absorption von CO₂ aus einer Gasmischung ist von besonderem Interesse für die Entfernung von Kohlendioxid aus Rauchgasen, vor allem für eine Verminderung der Emission von Kohlendioxid, die als Hauptursache für den so genannten Treibhauseffekt angesehen wird, aus Kraftwerksprozessen. Außerdem wird für einige Prozesse Kohlendioxid benötigt und mit dem erfindungsgemäßen Verfahren kann für diese Verfahren CO₂ als Edukt bereit gestellt werden.

### Stand der Technik

Im industriellen Maßstab werden zur Absorption von CO₂ aus einer Gasmischung üblicherweise wässrige Lösungen von Alkanolaminen als Absorptionsmedium eingesetzt. Das beladene Absorptionsmedium wird durch Erwärmen, Entspannen auf einen niedrigeren Druck oder Strippen regeneriert, wobei das Kohlendioxid desorbiert wird. Nach dem Regenerationsprozess kann das Absorptionsmedium wieder verwendet werden. Diese Verfahren sind zum Beispiel in Rolker, J.; Arlt, W.; "Abtrennung von Kohlendioxid aus Rauchgasen mittels Absorption" in Chemie Ingenieur Technik 2006, 78, Seiten 416 bis 424 beschrieben.

Diese Verfahren haben den Nachteil, dass zur Abtrennung von CO₂ durch Absorption und nachfolgende Desorption relativ viel Energie benötigt wird und dass bei der Desorption nur ein Teil des absorbierten CO₂ wieder desorbiert wird, so dass in einem Zyklus aus Absorption und Desorption der Anteil des zur Absorption von CO₂ genutzten Alkanolamins gering ist. Darüber hinaus sind die verwendeten Absorptionsmedien stark korrosiv und unterliegen bei der Absorption von CO₂ aus sauerstoffhaltigen Gasmischungen einem störenden oxidativen Abbau.

US 7,419,646 beschreibt ein Verfahren zur Entsäuerung von Abgasen, bei dem ein Absorptionsmedium verwendet wird, das bei der Absorption des sauren Gases zwei voneinander trennbare Phasen ausbildet. Als reaktive Verbindung zur Absorption eines sauren Gases wird in Spalte 6 unter anderem 4-Amino-2,2,6,6-tetramethylpiperidin genannt. Für die Absorption von CO₂ offenbart US 7,419,646 in Spalte 3, Zeilen 22 bis 32 die Verwendung von N,N,N',N',N''-pentamethyldiethylentriamin, N,N,N',N',N''-pentamethyldipropylentriamin, N,N-Bis(2,2-diethoxy-ethyl)methylamin und N,N-Dimethyldipropylentriamin als reaktive Verbindung zur Absorption. Das Verfahren von US 7,419,646 hat den Nachteil, dass zusätzliche Apparate für die Trennung der bei der Absorption anfallenden zwei Phasen erforderlich sind.

Auch FR 2 898 284 und FR 2 900 841 beschreiben Verfahren zur Entsäuerung von Abgasen, bei denen 4-Amino-2,2,6,6-tetramethylpiperidin als reaktive Verbindung verwendet wird.

DD 266 799 beschreibt ein Verfahren zur Reinigung von 4-Amino-2,2,6,6-tetramethylpiperidin, bei dem CO₂ in eine Lösung von 4-Amino-2,2,6,6-tetramethylpiperidin in Wasser und Aceton eingeleitet wird und das ausgefällte Salz durch Erhitzen auf 90 bis 200°C wieder zu CO₂ und 4-Amino-2,2,6,6-tetramethylpiperidin zersetzt wird.

Die Verwendung von ionischen Flüssigkeiten zur Absorption von CO₂ ist in X. Zhang et al., "Screening of ionic Liquids to Capture CO2 by COSMO-RS and Experiments", AIChE Journal, Vol. 54, Seiten 2171 bis 2728 beschrieben.

### Beschreibung der Erfindung

Es wurde nun überraschend gefunden, dass sich die Nachteile der bekannten Verfahren durch die Verwendung von 4-Amino-2,2,6,6-tetramethylpiperidinen zur Absorption von CO₂ vermeiden lassen, wobei das 4-Amino-2,2,6,6-tetramethylpiperidin an der 4-Aminogruppe mit einem oder zwei Alkylresten substituiert sein kann.

Gegenstand der Erfindung ist deshalb ein Verfahren zur Absorption von CO₂ aus einer Gasmischung durch in Kontakt bringen der Gasmischung mit einem Absorptionsmedium, das Wasser, Sulfolan und mindestens ein Amin der Formel (I) 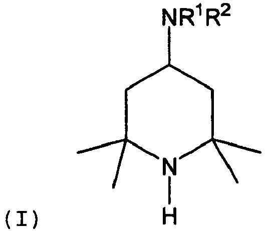 umfasst, worin R¹ und R² unabhängig voneinander Wasserstoff oder ein Alkylrest sind.

Gegenstand der Erfindung ist außerdem ein Absorptionsmedium, das ein Amin der Formel (I), Wasser und Sulfolan umfasst.

Gegenstand der Erfindung ist darüber hinaus auch eine Vorrichtung zur Abtrennung von CO₂ aus einer Gasmischung, umfassend eine Absorptionseinheit, eine Desorptionseinheit und ein im Kreislauf geführtes Absorptionsmedium, das Wasser, Sulfolan und ein Amin der Formel (I) umfasst.

Bei dem erfindungsgemäßen Verfahren erfolgt die Absorption von CO₂ durch in Kontakt Bringen einer Gasmischung mit einem Absorptionsmedium, das Wasser, Sulfolan und mindestens ein Amin der Formel (I) 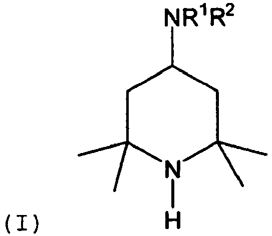 umfasst, worin R¹ und R² unabhängig voneinander Wasserstoff oder ein Alkylrest sind.

Das erfindungsgemäße Verfahren kann prinzipiell mit jeder Gasmischung durchgeführt werden, die CO₂ enthält, insbesondere mit Verbrennungsabgasen; Abgasen aus biologischen Prozessen wie Kompostierungen, Fermentationen oder Kläranlagen; Abgasen aus Kalzinierprozessen, wie Kalkbrennen und der Zementherstellung; Restgasen aus Hochofenprozessen der Eisenherstellung; sowie Restgasen aus chemischen Verfahren, wie Abgasen der Russherstellung oder der Wasserstoffherstellung durch Dampfreformierung. Vorzugsweise ist die Gasmischung ein Verbrennungsabgas, besonders bevorzugt ein Verbrennungsabgas, das von 1 bis 60 Vol.-% CO₂, insbesondere von 2 bis 20 Vol.-% CO₂ enthält. In einer besonders bevorzugten Ausführungsform ist die Gasmischung ein Verbrennungsabgas aus einem Kraftwerksprozess, insbesondere ein entschwefeltes Verbrennungsabgas aus einem Kraftwerksprozess. In der besonders bevorzugten Ausführungsform mit einem entschwefelten Verbrennungsabgas aus einem Kraftwerksprozess können alle für Kraftwerksprozesse bekannten Entschwefelungsverfahren verwendet werden, vorzugsweise eine Gaswäsche mit Kalkmilch oder nach dem Wellmann-Lord-Verfahren.

Im erfindungsgemäßen Verfahren umfasst das Absorptionsmedium mindestens ein Amin der Formel (I), worin R¹ und R² unabhängig voneinander Wasserstoff oder ein Alkylrest sind. Bevorzugte Alkylreste sind Alkylreste mit ein bis drei Kohlenstoffatomen, insbesondere Methylreste. In einer besonders bevorzugten Ausführungsform sind R¹ und R² Wasserstoff.

Amine der Formel (I) können aus handelsüblichem Triacetonamin durch reduktive Aminierung, d.h. durch Umsetzung von Triacetonamin mit einem Amin der Formel R¹R²NH und Wasserstoff in Gegenwart eines Hydrierkatalysators hergestellt werden. Verfahren zur reduktiven Aminierung von Triacetonamin sind dem Fachmann aus dem Stand der Technik bekannt, beispielsweise zur Herstellung des Amins der Formel (I) mit R¹, R² = H aus EP 0 033 529.

Im erfindungsgemäßen Verfahren umfasst das Absorptionsmedium zusätzlich zu mindestens einem Amin der Formel (I) auch Wasser. Vorzugsweise liegt im Absorptionsmedium das Gewichtsverhältnis von Wasser zu Aminen der Formel (I) im Bereich von 10:1 bis 1:10, besonders bevorzugt im Bereich von 5:1 bis 1:1 und insbesondere Bereich von 4:1 bis 2:1. Das Absorptionsmedium umfasst vorzugsweise mindestens 5 Gew.-% Amine der Formel (I), besonders bevorzugt mindestens 10 Gew.-% und insbesondere mindestens 25 Gew.-%.

Für das erfindungsgemäße Verfahren können alle zum in Kontakt bringen einer Gasphase mit einer Flüssigphase geeigneten Apparate verwendet werden, um die Gasmischung mit dem Absorptionsmedium in Kontakt zu bringen. Vorzugsweise werden aus dem Stand der Technik bekannte Gaswäscher oder Absorptionskolonnen verwendet, beispielsweise Membrankontaktoren, Radialstromwäscher, Strahlwäscher, Venturi-Wäscher, Rotations-Sprühwäscher Füllkörperkolonnen, Packungskolonnen und Bodenkolonnen. Besonders bevorzugt werden Absorptionskolonnen im Gegenstrombetrieb verwendet.

Im erfindungsgemäßen Verfahren wird die Absorption von CO₂ vorzugsweise bei einer Temperatur des Absorptionsmediums im Bereich von 0 bis 70°C, besonders bevorzugt 20 bis 50°C, durchgeführt. Bei Verwendung einer Absorptionskolonne im Gegenstrombetrieb beträgt die Temperatur des Absorptionsmediums besonders bevorzugt 30 bis 60°C beim Eintritt in die Kolonne und 35 bis 70°C beim Austritt aus der Kolonne.

Die Absorption von CO₂ wird vorzugsweise bei einem Druck der Gasmischung im Bereich von 0,8 bis 50 bar, besonders bevorzugt 0,9 bis 30 bar, durchgeführt. In einer besonders bevorzugten Ausführungsform wird die Absorption bei einem Gesamtdruck der Gasmischung im Bereich von 0,8 bis 1,5 bar, insbesondere 0,9 bis 1,1 bar, durchgeführt. Diese besonders bevorzugte Ausführungsform ermöglicht die Absorption von CO₂ aus dem Verbrennungsabgas eines Kraftwerks ohne Verdichtung des Verbrennungsabgases.

Im erfindungsgemäßen Verfahren kann das Absorptionsmedium zusätzlich zu Wasser, Sulfolan und mindestens einem Amin der Formel (I) noch ein oder mehrere Lösungsmittel enthalten.

Ein erfindungsgemäßes Absorptionsmedium umfasst zusätzlich zu Wasser und mindestens einem Amin der Formel (I) noch Sulfolan, CAS-Nr. 126-33-0, vorzugsweise mit einem Anteil an Sulfolan von mindestens 5 Gew.-%, besonders bevorzugt mindestens 10 Gew.-% und insbesondere mindestens 25 Gew.-%. Das Gewichtsverhältnis von Wasser zu Sulfolan liegt bei einem solchen Absorptionsmedium bevorzugt im Bereich von 10:1 bis 1:1, besonders bevorzugt im Bereich von 5:1 bis 2:1. Das Gewichtsverhältnis von Sulfolan zu Aminen der Formel (I) liegt bevorzugt im Bereich von 3:1 bis 1:3, besonders bevorzugt 2:1 bis 1:2.

Das erfindungsgemäße Absorptionsmedium kann zusätzlich zu Wasser, Sulfolan und mindestens einem Amin der Formel (I) eine ionische Flüssigkeit umfassen, vorzugsweise mit einem Anteil an ionischer Flüssigkeit von mindestens 5 Gew.-%, besonders bevorzugt mindestens 10 Gew.-% und insbesondere mindestens 25 Gew.-%. Das Gewichtsverhältnis von Wasser zu ionischer Flüssigkeit liegt bei einem solchen Absorptionsmedium bevorzugt im Bereich von 10:1 bis 1:1, besonders bevorzugt im Bereich von 5:1 bis 2:1. Das Gewichtsverhältnis von ionischer Flüssigkeit zu Aminen der Formel (I) liegt bevorzugt im Bereich von 3:1 bis 1:10, besonders bevorzugt 2:1 bis 1:5.

Eine ionische Flüssigkeit im Sinne der Erfindung ist ein Salz aus Anionen und Kationen oder eine Mischung von solchen Salzen, wobei das Salz bzw. die Mischung von Salzen einen Schmelzpunkt von weniger als 100°C aufweist. Vorzugsweise besteht die ionische Flüssigkeit aus einem oder mehreren Salzen von organischen Kationen mit organischen oder anorganischen Anionen. Mischungen aus mehreren Salzen mit unterschiedlichen organischen Kationen und gleichem Anion sind besonders bevorzugt.

Als organische Kationen eignen sich insbesondere Kationen der allgemeinen Formeln (II) bis (VI):

R¹R²R³R⁴N⁺ (II)

R¹R²R³R⁴P⁺ (III)

R¹R²R³S⁺ (IV)

R¹R²N⁺=C (NR³R⁴) (NR^{s}R⁶) (V)

R¹R²N⁺=C (NR³R⁴) (XR⁵) (VI)

in denen
R¹,R²,R³,R⁴,R⁵,R⁶ gleich oder unterschiedlich sind und Wasserstoff, einen linearen oder verzweigten aliphatischen oder olefinischen Kohlenwasserstoffrest mit 1 bis 30 Kohlenstoffatomen, einen cycloaliphatischen oder cycloolefinischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch eine oder mehrere Gruppen -O-, -NH-, -NR'-, -O-C(O)-, -(O)C-O-, -NH-C(O)-, -(O)C-NH-, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)- oder -N(CH₃)-S(O₂)-, unterbrochenen linearen oder verzweigten aliphatischen oder olefinischen Kohlenwasserstoffrest mit 2 bis 30 Kohlenstoffatomen, einen endständig durch OH, OR', NH₂, N(H)R' oder N(R')₂ funktionalisierten linearen oder verzweigten aliphatischen oder olefinischen Kohlenwasserstoffrest mit 1 bis 30 Kohlenstoffatomen oder einen blockweise oder statistisch aufgebauten Polyetherrest der Formel -(R⁷-O)ₙ-R⁸ bedeuten, wobei für Kationen der Formel (VI) R⁵ nicht Wasserstoff ist,
R' ein aliphatischer oder olefinischer Kohlenwasserstoffrest mit 1 bis 30 Kohlenstoffatomen ist,
R⁷ ein 2 bis 4 Kohlenstoffatome enthaltender linearer oder verzweigter Alkylenrest ist,
n von 1 bis 200, vorzugsweise 2 bis 60, ist,
R⁸ Wasserstoff, ein linearer oder verzweigter aliphatischer oder olefinischer Kohlenwasserstoffrest mit 1 bis 30 Kohlenstoffatomen, ein cycloaliphatischer oder cycloolefinischer Kohlenwasserstoffrest mit 5 bis 40 Kohlenstoffatomen, ein aromatischer Kohlenwasserstoffrest mit 6 bis 40 Kohlenstoffatomen, ein Alkylarylrest mit 7 bis 40 Kohlenstoffatomen oder ein Rest -C(O)-R⁹ ist,
R⁹ ein linearer oder verzweigter aliphatischer oder olefinischer Kohlenwasserstoffrest mit 1 bis 30 Kohlenstoffatomen, ein cycloaliphatischer oder cycloolefinischer Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen ist,
X ein Sauerstoffatom oder ein Schwefelatom ist, und
wobei mindestens einer und vorzugsweise jeder der Reste R¹, R², R³, R⁴, R⁵ und R⁶ von Wasserstoff verschieden ist.

Ebenso geeignet sind Kationen der Formeln (II) bis (VI), in denen die Reste R¹ und R³ zusammen einen 4- bis 10-gliedrigen, vorzugsweise 5- bis 6-gliedrigen, Ring bilden.

In den Kationen der Formel (V) sind vorzugsweise die Reste R¹ bis R⁵ Methylgruppen und der Rest R⁶ eine Ethylgruppe oder eine n-Propylgruppe.

In den Kationen der Formel (VI) sind vorzugswesie die Reste R¹ bis R⁴ Methylgruppen.

Ebenfalls geeignet sind heteroaromatische Kationen mit mindestens einem quaternären Stickstoffatom im Ring, das einen wie oben definierten Rest R¹ trägt, vorzugsweise am Stickstoffatom substituierte Derivate von Pyrrol, Pyrazol, Imidazol, Oxazol, Isoxazol, Thiazol, Isothiazol, Pyridin, Pyrimidin, Pyrazin, Indol, Chinolin, Isochinolin, Cinnolin, Chinoxalin oder Phthalazin.

Als anorganische Anionen eignen sich insbesondere Tetrafluoroborat, Hexafluorophosphat, Nitrat, Sulfat, Hydrogensulfat, Phosphat, Hydrogenphosphat, Dihydrogenphosphat, Hydroxid, Carbonat, Hydrogencarbonat und die Halogenide, vorzugsweise Chlorid.

Als organische Anionen eignen sich insbesondere R^{a}OSO₃⁻, R^{a}SO₃⁻, R^{a}OPO₃²⁻, (R^{a}O)₂PO₂⁻, R^{a}PO₃²⁻, R^{a}COO⁻, R^{a}O⁻, (R^{a}CO)₂N⁻, (R^{a}SO₂)₂N⁻, NCN⁻, R^{b}₃PF₃- und R^{b}BF₃-, wobei R^{a} ein linearer oder verzweigter aliphatischer Kohlenwasserstoffrest mit 1 bis 30 Kohlenstoffatomen, ein cycloaliphatischer Kohlenwasserstoffrest mit 5 bis 40 Kohlenstoffatomen, ein aromatischer Kohlenwasserstoffrest mit 6 bis 40 Kohlenstoffatomen, ein Alkylarylrest mit 7 bis 40 Kohlenstoffatomen oder ein linearer oder verzweigter Perfluoralkylrest mit 1 bis 30 Kohlenstoffatomen ist und R^{b} ein Perfluoralkylrest mit 1 bis 30 Kohlenstoffatomen, bevorzugt 1 bis 3 Kohlenstoffatomen, ist.

In einer bevorzugten Ausführungsform umfasst die ionische Flüssigkeit ein oder mehrere 1,3-Dialkylimidazoliumsalze, wobei die Alkylgruppen besonders bevorzugt unabhängig voneinander ausgewählt sind aus Methyl, Ethyl, n-Propyl, n-Butyl und n-Hexyl.

In einer weiteren bevorzugten Ausführungsform umfasst die ionische Flüssigkeit ein oder mehrere quaternäre Ammoniumsalze mit einem einwertigen Anion und Kationen der allgemeinen Formel (II) worin
R¹ ein Alkylrest mit 1 bis 20 Kohlenstoffatomen,
R² ein Alkylrest mit 1 bis 4 Kohlenstoffatomen,
R³ ein Rest (CH₂CHRO)ₙ-H mit n von 1 bis 200 und R = H oder CH₃ und
R⁴ ein Alkylrest mit 1 bis 4 Kohlenstoffatomen oder ein Rest (CH₂CHRO)ₙ-H mit n von 1 bis 200 und R = H oder CH₃ ist.

Verfahren zur Herstellung der ionischen Flüssigkeiten sind dem Fachmann aus dem Stand der Technik bekannt.

Im erfindungsgemäßen Verfahren werden bevorzugt die oben beschriebenen erfindungsgemäßen Absorptionsmedien verwendet.

Im erfindungsgemäßen Verfahren kann das Absorptionsmedium zusätzlich zu den bereits genannten Komponenten noch Additive, vorzugsweise Korrosionsinhibitoren und/oder benetzungsfördernde Additive enthalten.

Als Korrosionsinhibitoren können im erfindungsgemäßen Verfahren alle Stoffe verwendet werden, die dem Fachmann für Verfahren zur Absorption von CO₂ unter Verwendung von Alkanolaminen als geeignete Korrosionsinhibitoren bekannt sind, insbesondere die in US 4,714,597 beschriebenen Korrosionsinhibitoren.

Als benetzungsförderndes Addditiv werden vorzugsweise ein oder mehrere Tenside aus der Gruppe der nichtionischen Tenside, zwitterionischen Tenside und kationischen Tenside verwendet.

Geeignete nichtionische Tenside sind Alkylaminalkoxylate, Amidoamine, Alkanolamide, Alkylphosphinoxide, Alkyl-N-glucamide, Alkylglucoside, Gallensäuren, Alkylalkoxylate, Sorbitanester, Sorbitanesterethoxylate, Fettalkohole, Fettsäureethoxylate, Esterethoxylate und Polyethersiloxane.

Geeignete zwitterionischen Tenside sind Betaine, Alkylglycine, Sultaine, Amphopropionate, Amphoacetate, tertiäre Aminoxide und Silicobetaine.

Geeignete kationische Tenside sind quaternäre Ammoniumsalze mit einem oder zwei Substituenten mit 8 bis 20 Kohlenstoffatomen, insbesondere entsprechende Tetraalkylammoniumsalze, Alkylpyridiniumsalze, Esterquats, Diamidoaminquats, Imidazoliniumquats, Alkoxyalkylquats, Benzylquats und Silikonquats.

In einer bevorzugten Ausführungsform umfasst das benetzungsfördernde Additiv ein oder mehrere nichtionische Tenside der allgemeinen Formel R(OCH₂CHR')ₘOH mit m von 4 bis 40, worin R ein Alkylrest mit 8 bis 20 Kohlenstoffatomen, ein Alkylarylrest mit 8 bis 20 Kohlenstoffatomen oder ein Polypropylenoxidrest mit 3 bis 40 Propylenoxideinheiten ist und R' Methyl oder vorzugsweise Wasserstoff ist.

In einer weiteren bevorzugten Ausführungsform umfasst das benetzungsfördernde Additiv ein Polyether-Polysiloxan-Copolymer das mehr als 10 Gew.-% [Si(CH₃)₂O]-Einheiten und mehr als 10 Gew.-% [CH₂CHR-O]-Einheiten enthält, in denen R Wasserstoff oder Methyl ist. Besonders bevorzugt sind Polyether-Polysiloxan-Copolymere der allgemeinen Formeln (VII) bis (IX):

(CH₃)₃Si-O-[SiR¹(CH₃)-O]ₙ-Si(CH₃)₃ (VII)

R²O-Aₚ-[B-A]ₘ-A_{q}-R² (VIII)

R²O-[A-Z]ₚ-[B-Si(CH₃)₂-Z-O-A-Z]ₘ-B-Si(CH₃)₂[Z-O-A]_{q}O_{1-q}R² (IX)

worin
A ein zweiwertiger Rest der Formel -[CH₂CHR³-o]ᵣ- ist,
B ein zweiwertiger Rest der Formel -[Si(CH₃)₂-O]ₛ- ist,
Z ein zweiwertiger linearer oder verzweigter Alkylenrest mit 2 bis 20 Kohlenstoffatomen und vorzugsweise -(CH₂)₃-ist,
n = 1 bis 30 ist,
m = 2 bis 100 ist,
p, q = 0 oder 1 ist,
r = 2 bis 100 ist,
s = 2 bis 100 ist,
von 1 bis 5 der Reste R¹ Reste der allgemeinen Formel -Z-O-A-R² sind und die restlichen Reste R¹ Methyl sind,
R² Wasserstoff oder ein aliphatischer oder olefinischer Alkylrest oder Acylrest mit 1 bis 20 Kohlenstoffatomen ist und
R³ Wasserstoff oder Methyl ist.

Die benetzungsfördernden Additive sind dem Fachmann bereits aus dem Stand der Technik als Additive für wässrige Lösungen bekannt und können nach aus dem Stand der Technik bekannten Verfahren hergestellt werden.

Im erfindungsgemäßen Verfahren werden Temperatur und Druck in der Absorption sowie die Zusammensetzung des Absorptionsmediums vorzugsweise so gewählt, dass das Absorptionsmedium nach der Absorption von CO₂ einphasig vorliegt, d.h. die Absorption von CO₂ im Absorptionsmedium führt nicht zur Ausfällung eines Feststoffs oder zur Abscheidung einer zweiten flüssigen Phase. Diese bevorzugte Ausführungsform des erfindungsgemäßen Verfahrens erfordert keine zusätzlichen Apparate für eine Phasentrennung und kann in den aus dem Stand der Technik bekannten Vorrichtungen zur Absorption von CO₂ mit Alkanolaminen durchgeführt werden.

In einer bevorzugten Ausführungsform des erfindungsgemäßen Verfahrens wird im Absorptionsmedium absorbiertes CO₂ durch Erhöhen der Temperatur und/oder Verringern des Drucks wieder desorbiert und das Absorptionsmedium nach dieser Desorption von CO₂ wieder zur Absorption von CO₂ verwendet. Durch einen solchen zyklischen Prozess aus Absorption und Desorption kann CO₂ aus der Gasmischung ganz oder teilweise abgetrennt und getrennt von anderen Komponenten der Gasmischung erhalten werden.

Alternativ zum Erhöhen der Temperatur oder dem Verringern des Drucks oder zusätzlich zu einer Temperaturerhöhung und/oder Druckverringerung kann auch eine Desorption durch Strippen des mit CO₂ beladenen Absorptionsmediums mit einem Gas durchgeführt werden.

Wenn bei der Desorption von CO₂ zusätzlich auch Wasser aus dem Absorptionsmedium entfernt wird, kann dem Absorptionsmedium vor der Wiederverwendung zur Absorption gegebenenfalls noch Wasser zugesetzt werden.

Für die Desorption können alle Apparate verwendet werden, die aus dem Stand der Technik zur Desorption eines Gases aus einer Flüssigkeit bekannt sind. Vorzugsweise wird die Desorption in einer Desorptionskolonne durchgeführt. Alternativ kann die Desorption von CO₂ auch in einer oder mehreren Flash-Verdampfungsstufen durchgeführt werden.

Bei einer Desorption durch Erhöhen der Temperatur wird die Desorption von CO₂ vorzugsweise bei einer Temperatur des Absorptionsmediums im Bereich von 50 bis 200°C, besonders bevorzugt 80 bis 150°C, durchgeführt. Die Temperatur bei der Desorption liegt dabei vorzugsweise mindestens 20 °C, besonders bevorzugt mindestens 50 °C, oberhalb der Temperatur bei der Absorption.

Bei einer Desorption durch Verringern des Drucks wird die Desorption von CO₂ vorzugsweise bei einem Gesamtdruck in der Gasphase im Bereich von 0,01 bis 10 bar, insbesondere 0,1 bis 5 bar, durchgeführt. Der Druck bei der Desorption liegt dabei vorzugsweise mindestens 1,5 bar, besonders bevorzugt mindestens 4 bar, unterhalb der Temperatur bei der Absorption.

Bei einer Desorption durch Erhöhen der Temperatur kann der Druck bei der Desorption von CO₂ auch höher sein als bei der Absorption von CO₂. Bei dieser Ausführungsform liegt der Druck bei der Desorption von CO₂ vorzugsweise bis zu 5 bar, besonders bevorzugt bis zu 3 bar oberhalb des Drucks bei der Absorption von CO₂. Mit dieser Ausführungsform kann das aus der Gasmischung abgetrennte CO₂ ohne Einsatz von mechanischer Energie auf einen höheren Druck als den der Gasmischung verdichtet werden.

Eine erfindungsgemäße Vorrichtung zur Abtrennung von CO₂ aus einer Gasmischung umfasst eine Absorptionseinheit, eine Desorptionseinheit und ein im Kreislauf geführtes erfindungsgemäßes Absorptionsmedium. Als Absorptionseinheit der erfindungsgemäßen Vorrichtung eignen sich die oben für die Absorption in einem erfindungsgemäßen Verfahren beschriebenen Apparate. Als Desorptionseinheit der erfindungsgemäßen Vorrichtung eignen sich die oben für die Desorption in einem erfindungsgemäßen Verfahren beschriebenen Apparate. Vorzugsweise umfasst die erfindungsgemäße Vorrichtung eine Absorptionseinheit und eine Desorptionseinheit, wie sie dem Fachmann von Vorrichtungen zur Abtrennung von CO₂ aus einer Gasmischung unter Verwendung eines Alkanolamins bekannt sind.

Das erfindungsgemäße Verfahren und die erfindungsgemäßen Absorptionsmedien ermöglichen durch die Verwendung von mindestens einem Amin der Formel (I) im Absorptionsmedium gegenüber den bekannten Verfahren und Absorptionsmedien, insbesondere gegenüber den technisch meist eingesetzten Alkanolaminen, einen höheren Beladungsgrad des Absorptionsmediums mit CO₂ in der Absorption, wobei der Beladungsgrad im Sinne der Erfindung das molare Verhältnis von CO₂ zu Amin im Absorptionsmedium bezeichnet. Darüber hinaus ist das Absorptionsmedium des erfindungsgemäßen Verfahrens weniger korrosiv, weniger toxisch und zeigt eine höhere Chemisorptionsgeschwindigkeit für CO₂ und einen geringeren oxidativen Abbau mit Sauerstoff als Absorptionsmedien die Alkanolamine enthalten. In der Ausführungsform eines zyklischen Prozesses aus Absorption und Desorption wird außerdem gegenüber den bekannten Verfahren und Absorptionsmedien, insbesondere gegenüber Alkanolaminen, ein verbesserter Kohlendioxidhub erzielt, wobei der Kohlendioxidhub im Sinne der Erfindung die Differenz zwischen dem Beladungsgrad des Absorptionsmediums mit CO₂ nach der Absorption von CO₂ und dem Beladungsgrad des Absorptionsmediums mit CO₂ nach der Desorption von CO₂ bezeichnet. Diese Vorteile ermöglichen eine wirksamere Absorption von CO₂ aus Gasmischungen mit geringem CO₂-Partialdruck, sowie eine Verkleinerung der Apparate und eine Senkung des Energieverbrauchs gegenüber den aus dem Stand der Technik bekannten Verfahren. Wegen der geringeren Korrosivität werden im erfindungsgemäßen Verfahren außerdem weniger Korrosionsinhibitoren benötigt als in den bekannten Verfahren.

Erfindungsgemäße Absorptionsmedien, die zusätzlich zu Wasser und einem Amin der Formel (I) noch Sulfolan enthalten, zeigen einen weiter verbesserten Kohlendioxidhub, insbesondere bei einem Verfahren mit Desorption des CO₂ durch Temperaturerhöhung.

Mit Absorptionsmedien, die zusätzlich zu Wasser und einem Amin der Formel (I) noch mindestens eine ionische Flüssigkeit enthalten, lässt sich die Desorption von CO₂ bei höheren Temperaturen und/oder niedrigeren Drücken durchführen, ohne dass es in der Desorption zu einem Verlust an Lösungsmittel oder durch die Verdampfung von Wasser zu einer Ausfällung von Feststoff oder eine Phasentrennung des Absorptionsmittels kommt.

Die nachfolgenden Beispiele verdeutlichen die Erfindung, ohne jedoch den Gegenstand der Erfindung zu beschränken.

### Beispiele

### Beispiel 1 (Vergleichsbeispiel)

In einer thermostatisierten und mit einer Druckregelung versehenen Apparatur zur Vermessung von Gas-Flüssig-Gleichgewichten wurde eine Mischung aus 30 Gew.-% 4-Amino-2,2,6,6-tetramethylpiperidin und 70 Gew.-% Wasser bei konstanter Temperatur vorgelegt und mit gasförmigem Kohlendioxid bei konstantem Druck in Kontakt gebracht, wobei Druck und Temperatur variiert wurden. Jeweils nach Erreichen des Gleichgewichtszustandes wurde der Gehalt an absorbiertem CO₂ in dem beladenen Absorptionsmittel bestimmt und daraus der Beladungsgrad als molares Verhältnis von CO₂ zu Amin im beladenen Absorptionsmittel berechnet. Die untersuchten Temperaturen und Drücke und die dafür bestimmten Beladungsgrade sind in Tabelle 1 zusammengefasst.

### Beispiel 2

Beispiel 1 wurde wiederholt mit einer Mischung aus 30 Gew.-% 4-Amino-2,2,6,6-tetramethyl-piperidin, 35 Gew.-% Sulfolan und 35 Gew.-% Wasser.

### Beispiel 3 (Vergleichsbeispiel)

Beispiel 1 wurde wiederholt mit einer Mischung aus 30 Gew.-% Monoethanolamin (MEA) und 70 Gew.-% Wasser.

Aus den Beladungsgraden ergeben sich die in Tabelle 2 angeführten Kohlendioxidhübe für Absorption und Desorption bei 1,5 bar und eine Desorption durch Temperaturerhöhung von 40 auf 120°C sowie die in Tabelle 3 angeführten Kohlendioxidhübe für Absorption und Desorption bei 120°C und eine Desorption durch Druckerniedrigung von 1,5 auf 0,8 bar.

**Tabelle 1**

| Beispiel | Druck [bar] | Temperatur [°C] | Beladungsgrad [mol CO₂ / mol Amin] |
|---|---|---|---|
| 1* | 1,5 | 40 | 1,20 |
| 1* | 3,0 | 40 | 1,29 |
| 1* | 0,8 | 120 | 0,35 |
| 1* | 1,5 | 120 | 0,64 |
| 2 | 1,5 | 40 | 1,21 |
| 2 | 3,0 | 40 | 1,29 |
| 2 | 0,8 | 120 | 0,35 |
| 2 | 1,5 | 120 | 0,49 |
| 3* | 1,5 | 40 | 0,63 |
| 3* | 3,0 | 40 | 0,70 |
| 3* | 0,8 | 120 | 0,39 |
| 3* | 1,5 | 120 | 0,41 |

| | | | |
|---|---|---|---|
| *nicht erfindungsgemäß | | | |

**Tabelle 2**

| Beispiel | Kohlendioxidhub [mol CO₂ / mol Amin] |
|---|---|
| 1* | 0,56 |
| 2 | 0,72 |
| 3* | 0,22 |

| | |
|---|---|
| *nicht erfindungsgemäß | |

**Tabelle 3**

| Beispiel | Kohlendioxidhub [mol CO₂ / mol Amin] |
|---|---|
| 1* | 0,29 |
| 2 | 0,14 |
| 3* | 0,02 |

| | |
|---|---|
| *nicht erfindungsgemäß | |

## Patentansprüche

1. Absorptionsmedium zur Absorption von CO₂ aus einer Gasmischung,
umfassend Wasser, Sulfolan und mindestens ein Amin der Formel (I) 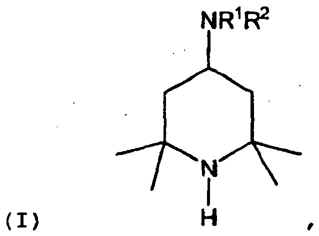
worin R¹ und R² unabhängig voneinander Wasserstoff oder ein Alkylrest sind.

2. Absorptionsmedium nach Anspruch 1,
**dadurch gekennzeichnet,**
**dass** das Gewichtsverhältnis von Wasser zu Sulfolan im Bereich von 10:1 bis 1:1 liegt.

3. Absorptionsmedium nach Anspruch 1 oder 2,
**dadurch gekennzeichnet,**
**dass** das Gewichtsverhältnis von Sulfolan zu Aminen der Formel (I) im Bereich von 3:1 bis 1:3 liegt.

4. Absorptionsmedium nach einem der Ansprüche 1 bis 3,
**dadurch gekennzeichnet,**
**dass** in Formel (I) R¹ und R² Wasserstoff sind.

5. Absorptionsmedium nach einem der Ansprüche 1 bis 4,
**dadurch gekennzeichnet,**
**dass** das Gewichtsverhältnis von Wasser zu Aminen der Formel (I) im Bereich von 10:1 bis 1:10 liegt.

6. Absorptionsmedium nach einem der Ansprüche 1 bis 5,
**dadurch gekennzeichnet,**
**dass** es mindestens 5 Gew.-% Amine der Formel (I) umfasst.

7. Verfahren zur Absorption von CO₂ aus einer Gasmischung durch in Kontakt bringen der Gasmischung mit einem Absorptionsmedium gemäß einem der Ansprüche 1 bis 6.

8. Verfahren nach Anspruch 7,
**dadurch gekennzeichnet,**
**dass** die Gasmischung ein Verbrennungsabgas ist.

9. Verfahren nach Anspruch 7 oder 8,
**dadurch gekennzeichnet,**
**dass** das Absorptionsmedium nach der Absorption von CO₂ einphasig vorliegt.

10. Verfahren nach einem der Ansprüche 7 bis 9,
**dadurch gekennzeichnet,**
**dass** im Absorptionsmedium absorbiertes CO₂ durch Erhöhen der Temperatur und/oder Verringern des Drucks wieder desorbiert wird und das Absorptionsmedium nach dieser Desorption von CO₂ wieder zur Absorption von CO₂ verwendet wird.

11. Verfahren nach Anspruch 10,
**dadurch gekennzeichnet,**
**dass** die Absorption bei einer Temperatur im Bereich von 0 bis 70°C und die Desorption bei einer höheren Temperatur im Bereich von 50 bis 200°C durchgeführt wird.

12. Verfahren nach Anspruch 10 oder 11,
**dadurch gekennzeichnet,**
**dass** die Absorption bei einem Druck im Bereich von 0,8 bis 50 bar und die Desorption bei einem niedrigeren Druck im Bereich von 0,01 bis 10 bar durchgeführt wird.

13. Vorrichtung zur Abtrennung von CO₂ aus einer Gasmischung, umfassend eine Absorptionseinheit, eine
Desorptionseinheit und ein im Kreislauf geführtes Absorptionsmedium,
**dadurch gekennzeichnet,**
**dass** sie ein Absorptionsmedium nach einem der Ansprüche 1 bis 6 umfasst.

## Claims

1. Absorption medium for the absorption of CO₂ from a gas mixture,
said absorption medium comprising water, sulpholane and at least one amine of formula (I) 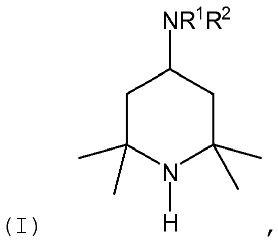
where R¹ and R² independently of one another are hydrogen or an alkyl moiety.

2. Absorption medium according to Claim 1,
**characterized in that**
the weight ratio of water to sulpholane is in the range from 10:1 to 1:1.

3. Absorption medium according to Claim 1 or 2,
**characterized in that**
the weight ratio of sulpholane to amines of formula (I) is in the range from 3:1 to 1:3.

4. Absorption medium according to any one of Claims 1 to 3,
**characterized in that**,
in formula (I), R¹ and R² are hydrogen.

5. Absorption medium according to any one of Claims 1 to 4,
**characterized in that**
the weight ratio of water to amines of formula (I) is in the range from 10:1 to 1:10.

6. Absorption medium according to any one of Claims 1 to 5,
**characterized in that**
it comprises at least 5% by weight of amines of formula (I).

7. Method for the absorption of CO₂ from a gas mixture by contacting the gas mixture with an absorption medium according to one of Claims 1 to 6.

8. Method according to Claim 7,
**characterized in that**
the gas mixture is a combustion exhaust gas.

9. Method according to Claim 7 or 8,
**characterized in that**
the absorption medium is present as one phase after the absorption of CO₂.

10. Method according to any one of Claims 7 to 9,
**characterized in that**
CO₂ absorbed in the absorption medium is desorbed by increasing the temperature and/or decreasing the pressure and the absorption medium after this desorption of CO₂ is reused for the absorption of CO₂.

11. Method according to Claim 10,
**characterized in that**
the absorption is carried out at a temperature in the range from 0 to 70°C and the desorption at a higher temperature in the range from 50 to 200°C.

12. Method according to Claim 10 or 11,
**characterized in that**
the absorption is carried out at a pressure in the range from 0.8 to 50 bar and the desorption at a lower pressure in the range from 0.01 to 10 bar.

13. Device for separating CO₂ from a gas mixture, said device comprising an absorption unit, a desorption unit and a circulating absorption medium,
**characterized in that**
said device comprises an absorption medium according to any one of Claims 1 to 6.

## Revendications

1. Agent d'absorption pour l'absorption de CO₂ à partir d'un mélange gazeux,
comprenant de l'eau, du sulfolane et au moins une amine de formule (I) 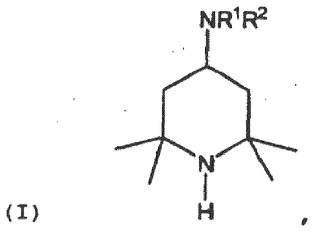
dans laquelle R¹ et R² sont indépendamment l'un de l'autre l'hydrogène ou un radical alkyle.

2. Agent d'absorption selon la revendication 1, **caractérisé en ce que** le rapport en poids entre l'eau et le sulfolane se situe dans la plage allant de 10:1 à 1:1.

3. Agent d'absorption selon la revendication 1 ou 2, **caractérisé en ce que** le rapport en poids entre le sulfolane et les amines de formule (I) se situe dans la plage allant de 3:1 à 1:3.

4. Agent d'absorption selon l'une quelconque des revendications 1 à 3, **caractérisé en ce que**, dans la formule (I), R¹ et R² sont l'hydrogène.

5. Agent d'absorption selon l'une quelconque des revendications 1 à 4, **caractérisé en ce que** le rapport en poids entre l'eau et les amines de formule (I) se situe dans la plage allant de 10:1 à 1:10.

6. Agent d'absorption selon l'une quelconque des revendications 1 à 5, **caractérisé en ce qu'**il comprend au moins 5 % en poids d'amines de formule (I).

7. Procédé d'absorption de CO₂ à partir d'un mélange gazeux par mise en contact du mélange gazeux avec un agent d'absorption selon l'une quelconque des revendications 1 à 6.

8. Procédé selon la revendication 7, **caractérisé en ce que** le mélange gazeux est un gaz d'échappement de combustion.

9. Procédé selon la revendication 7 ou 8, **caractérisé en ce que** l'agent d'absorption se présente sous forme monophasée après l'absorption du CO₂.

10. Procédé selon l'une quelconque des revendications 7 à 9, **caractérisé en ce que** le CO₂ absorbé dans l'agent d'absorption est désorbé par élévation de la température et/ou réduction de la pression et l'agent d'absorption est réutilisé pour l'absorption de CO₂ après cette désorption de CO₂.

11. Procédé selon la revendication 10, **caractérisé en ce que** l'absorption est réalisée à une température dans la plage allant de 0 à 70 °C et la désorption à une température plus élevée dans la plage allant de 50 à 200 °C.

12. Procédé selon la revendication 10 ou 11, **caractérisé en ce que** l'absorption est réalisée à une pression dans la plage allant de 0,8 à 50 bar et la désorption à une pression plus basse dans la plage allant de 0,01 à 10 bar.

13. Dispositif pour la séparation de CO₂ à partir d'un mélange gazeux, comprenant une unité d'absorption, une unité de désorption et un agent d'absorption mis en circulation, **caractérisé en ce qu'**il comprend un agent d'absorption selon l'une quelconque des revendications 1 à 6.
